(19) Europäisches Patentamt
European Patent Office
Office européen des brevets

(11) **EP 1 473 824 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(51) Int Cl.:
***H02P 6/06*** *(2006.01)*

(21) Anmeldenummer: **04006583.1**

(22) Anmeldetag: **18.03.2004**

(54) **Steuereinheit zur Ansteuerung eines Regeltransistors einer Lüfteranordnung**

Control unit for driving a transistor controlled fan arrangement

Unité de commande pour commander un transistor de contrôle d'un ventilateur

(84) Benannte Vertragsstaaten:
**FR GB**

(30) Priorität: **30.04.2003 DE 10319557**

(43) Veröffentlichungstag der Anmeldung:
**03.11.2004 Patentblatt 2004/45**

(73) Patentinhaber: **Fujitsu Siemens Computers GmbH 80807 München (DE)**

(72) Erfinder: **Busch, Peter**
**86179 Augsburg (DE)**

(74) Vertreter: **Epping - Hermann - Fischer Patentanwaltsgesellschaft mbH Ridlerstrasse 55 80339 München (DE)**

(56) Entgegenhaltungen:
| | |
|---|---|
| WO-A-01/79864 | WO-A-99/62169 |
| DE-A1- 3 429 427 | DE-A1- 4 408 442 |
| DE-C1- 19 837 014 | |

EP 1 473 824 B1

**Beschreibung**

Die Erfindung betrifft eine Steuereinheit zur Ansteuerung eines Regeltransistors einer Lüfteranordnung, in der der Regeltransistor mit einem elektronisch kommutierten Lüfter in Reihe geschaltet ist, mit Steuermitteln zur analogen Ansteuerung des Regeltransistors mit einer Ansteuerspannung in Abhängigkeit einer Steuereingangsspannung.

Lüfteranordnungen, insbesondere für Computer, besitzen vielfach eine solche Steuereinheit, um die Drehzahl des Lüfters steuern zu können. Eine hohe Lüfterdrehzahl ist mit einem hohen Geräuschpegel verbunden, was von vielen Benutzern als störend empfunden wird. Daher ist es in hochwertigen Computern üblich, die Drehzahl des Lüfters dem jeweiligen Kühlungsbedarf anzupassen. In Phasen geringer Belastung erzeugt ein Computer wenig Wärme und es ist nur eine geringer Kühlleistung erforderlich, so daß der Lüfter mit einer geringen Drehzahl betrieben werden kann.

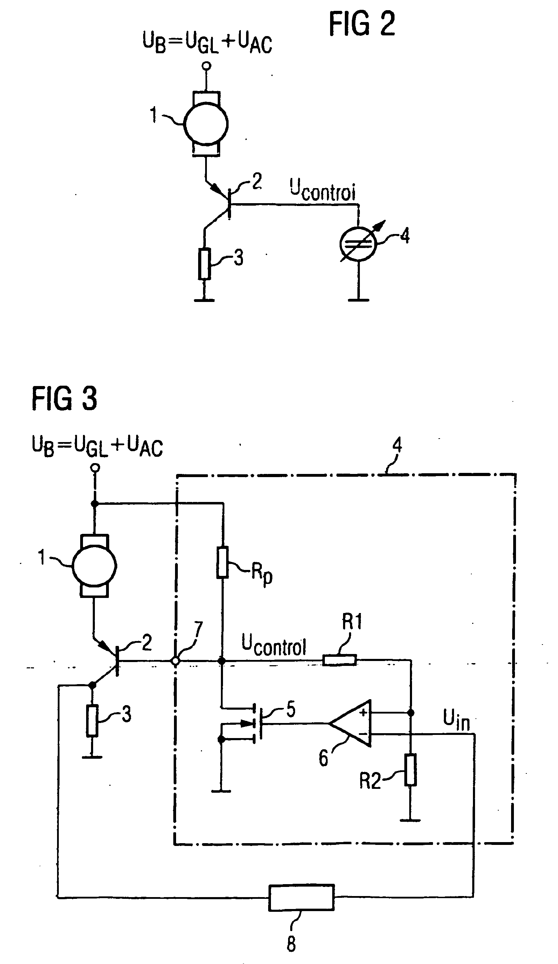

Die Lüftersteuerung erfolgt durch den in Reihe geschalteten Regeltransistor, durch den die über dem Lüfter anliegende Spannung einstellbar ist. Das angewandte Schaltungsprinzip ist in der Figur 2 dargestellt. Dort ist zwischen Anschlüssen einer Betriebsspannung $U_B$ ein Lüfter 1, ein Regeltransistor 2 und ein Strommeßwiderstand 3 in Reihe geschaltet. Der Strommeßwiderstand 3 ist sehr gering und kann dazu dienen, bei elektronisch kommutierten Lüftern den Lüfterstrom zu erfassen und daraus aufgrund der darin enthaltenen Kommutierungsimpulse die Lüfterdrehzahl zu ermitteln.

Durch den Regeltransistor 2 kann in einfacher Weise die Spannung über den Lüfter 1 beeinflusst werden. Zur Ansteuerung des Regeltransistors 2 ist eine Steuereinheit 4 vorgesehen.

Je nach erfolgter Ansteuerung durch die Steuereinheit 4 ändert sich der Spannungsabfall über dem Regeltransistor 2 und damit die Spannung über dem Lüfter 1. Im dargestellten Fall wird der Regeltransistor 2 als Spannungsfolger betrieben, das heißt die Spannung am Emitter ist durch die Spannung an der Basis sowie die Basis-Emitter-Spannung festgelegt. Diese Schaltung ist stellvertretend für andere in Verbindung mit einem Regeltransistor realisierbare Schaltungsprinzipien genannt.

Eine konkrete Realisierung einer Steuereinheit aus dem Stand der Technik zeigt Figur 3. Dort beinhaltet die Steuereinheit 4 einen Steuertransistor 5, der von einem Operationsverstärker 6 angesteuert wird. Der invertierende Eingang des Operationsverstärkers 6 wird mit einer Steuereingangsspannung $U_{in}$ beaufschlagt. Je nach Höhe der Steuereingangsspannung $U_{in}$ wird der Steuertransistor 5 mehr oder weniger leitend gesteuert, wodurch sich die Ansteuerspannung $U_{control}$ an einem Steuerausgang 7 der Steuereinheit 4 ändert. Die Steuereingangsspannung $U_{in}$ wird von einer Drehzahlerfassungsvorrichtung 8 erzeugt, die mit dem Strommeßwiderstand $R_s$ verbunden ist.

Um eine zuverlässige Drehzahlregelung eines Lüfters 1 zu erreichen, ist es von großer Bedeutung, daß die Drehzahlerfassungsvorrichtung 8 die Kommutierungsimpulse des Lüftermotors 1 sicher erkennen kann. Problematisch ist bei Schaltungen nach dem Stand der Technik jedoch, daß es zu Schwankungen in der Betriebsspannung $U_B$ kommen kann, die Betriebsspannung $U_B$ setzt sich also aus einem Gleichspannungsanteil $U_{Gl}$ und einem Wechselspannungsanteil $U_{AC}$ zusammen. Der Wechselspannungsanteil $U_{AC}$ kann eine eine ähnliche Frequenz wie die Kommutierungsvorgänge besitzen, so daß es zu einer fehlerhaften Erkennung von Lüfterimpulsen kommen kann, wenn dieser Wechselspannungsanteil sich auf den Strom durch den Strommeßwiderstand auswirkt. Eine stoßartige Schwankung der Betriebsspannung wird immer dann auftreten, wenn andere Verbraucher am gleichen Netzteil Lastsprünge erzeugen, wie zum Bespiel Festplatten oder Prozessoren mit aktivierter Energiesparfunktion.

Zur Lösung dieses Problems ist es bekannt, eine separate passive Filterung der Betriebsspannung des Lüfters mit Drosselspulen und Kondensatoren vorzusehen. Nachteilig ist, daß beide Bauteile verhältnismäßig groß dimensioniert sein müssen und somit hohe Zusatzkosten entstehen.

In einer anderen Lösung des Problems werden zur Erkennung von Kommutierungen Stromschwankungen des Lüfters als Prozentwert erfaßt und mit einem Differenzprozentwert verglichen, der größer als die prozentuale Schwankung der Betriebsspannung ist. Das heißt, wenn die Betriebsspannung beispielsweise um $\pm$ 5 % schwanken kann und die Erkennungsschwelle für eine Lüfterkommutierung bei beispielsweise $\pm$ 15 % liegt, ist zunächst anzunehmen, daß keine fehlerhafte Erkennung vorkommen kann.

Bei diesem Verfahren kann es aber trotzdem zu einer fehlerhaften Erkennung von Kommutierungsimpulsen kommen, wenn der Lüfter mit reduzierter Betriebsspannung betrieben wird. Dies ist bei Betrachtung der Schaltung nach dem Stand der Technik gemäß den Figuren 2 und 3 ersichtlich, bei denen der Regeltransistor 2 dem Lüfter eine stabilisierte Regelspannung zuführt. Während an einem Anschluß des Lüfters 1 die schwankende Betriebsspannung anliegt, wird dem anderen Anschluß des Lüfters 1 eine stabilisierte Spannung zugeführt. Demnach schwankt auch die Spannung über dem Lüfter 1 und es kommt zu einem entsprechend schwankenden Stromfluß durch den Lüfter 1. Dieser schwankende Strom wird als Spannung über dem Strommeßwiderstand $R_s$ abgegriffen und der Drehzahlerfassungsvorrichtung 8 zugeführt. Dies führt dazu, daß eine Schwankung der Betriebsspannung zu einer fehlerhaften Erkennung führen kann. Es wird also ein Kommutierungsimpuls erkannt, obwohl ein solcher nicht vorliegt, sondern eine Störspannung, die beispielsweise durch Aktivierung eines Prozessors im Energiesparmodus verursacht wurde.

Die Höhe der Spannungsschwankungen läßt sich durch folgende Rechnung ermitteln, wobei eine übliche Schaltung gemäß Figur 3 zugrundegelegt wird, bei der die Ansteuerspannung U-control durch einen N-MOS-Transistor in Open-Drain-Konfiguration und einen Operationsverstärker erzeugt wird. Die Lüfterspannung ergibt sich zu

$$U_{Lüfter} = U_{G1} + U_{AC} + U_{BE} - U_{control}$$

wobei $U_{control} = U_{in} * (R1 + R2)/R2$ gilt

mit

$U_{GI}$ = Gleichspannungsanteil der Betriebsspannung,

$U_{AC}$ = Wechselspannungsanteil der Betriebsspannung,

$U_{BE}$ = Basis-Emitter-Spannung des Regeltransistors 2 und

$U_{control}$ = Ansteuerspannung.

Die stabilisierte Regelspannung ist zwar veränderbar zur Drehzahlregelung des Lüfters, jedoch handelt es sich um eine verhältnismäßig langsame Spannungsänderung mit einer Zeitkonstanten, die typischerweise im Bereich von 100 ms liegt. Die Zeitkonstante von Kommutierungsimpulsen liegt dagegen bei typischerweise 1 ms.

Nimmt man in einem Rechenbeispiel an, daß $U_{G1}$ = 12 V, $U_{AC}$ = $\pm$ 0,5 V, $U_{BE}$ = -0,7 V und $U_{control}$ = 8 V beträgt, erhält man für die Spannung über dem Lüfter

$$U_{Lüfter} = 12\ V \pm 0,5\ V - 0,7\ V - 8\ V = 3,3\ V \pm 0,5\ V =$$
$$= 3,3\ V \pm 15\ \%.$$

Trotz einer Betriebsspannungsschwankung von nur $\pm$ 5 % schwankt die Lüfterspannung demnach um $\pm$ 15 %. Bei ohmschem Verhalten des Lüfters wären jetzt Stromschwankungen von $\pm$ 15 % zu erwarten, so daß auch die Spannung am Strommeßwiderstand $R_S$ um $\pm$ 15 % schwankt.

Ein weiteres Problem stellt das nicht-lineare Verhalten der internen Lüfterelektronik von handelsüblichen Lüftern dar. Die Fin-/Ausschalt-schwelle eines solchen typischen Lüfters liegt bei einer Betriebsspannung von 3 V, das heißt, daß die Stromschwankungen weit mehr als $\pm$ 15 % betragen können, wenn nämlich im schlimmsten Fall der Lüfter andauernd ein- und ausschaltet. Dieses Ein- und Ausschalten wird dann fälschlicherweise von der Drehzahlerfassungsvorrichtung 8 als Stromschwankung interpretiert, die von einer Kommutierung des Lüfters verursacht wurde.

Aus der DE 44 08 442 A1 ist eine Lüftersteuerung mittels Pulsweitenmodulation bekannt. Bei einer Änderung der Betriebsspannung ändert sich das Tastverhältnis des PWMmodulierten Steuersignals.

Die WO 99/62169 A offenbart eine analoge Ansteuerung eines Regeltransistors für einen Lüftermotor. Über einen in Reihe zum Motor geschalteten Messwiderstand wird anhand der Kommutierungsimpulse des Motors eine Drehzahlerkennung durchgeführt.

Aufgabe der Erfindung ist es, eine Steuereinheit für eine Lüfteranordnung anzugeben, bei der Schwankungen der Betriebsspannung nicht dazu führen, daß fälschlicherweise Kommutierungsimpulse von einer Drehzahlerfassungsvorrichtung erkannt werden.

Diese Aufgabe wird erfindungsgemäß durch eine Steuereinheit mit den Merkmalen des Anspruchs 1 gelöst.

Durch die erfindungsgemäße Ausgestaltung einer Steuereinheit wird das Steuersignal entsprechend des Wechselspannungsanteils der Betriebsspannung nachgeführt. Wenn sich also die Betriebsspannung um beispielsweise 5 % erhöht, wird der Regeltransistor so angesteuert, daß sich dadurch auch am anderen Anschluß des Lüfters die Spannung erhöht, im günstigsten Fall um den gleichen Spannungsbetrag, so daß insgesamt die Spannung über dem Lüfter konstant bleibt.

In der erfindungsgemäßen Ausgestaltung nutzen die Kompensationsmittel einen Operationsverstärker, wobei auf einen Eingang die Steuereingangsspannung geführt ist und auf den anderen Eingang die Betriebsspannung geführt ist. Dabei ist besonders vorteilhaft, daß eine solche Schaltung ohne Kondensator aus kommt und daher einfach in einer integrierten Schaltung eingesetzt werden kann.

In einer konkreten Ausgestaltung wird die Betriebsspannung über einen Spannungsteiler dem invertierenden Eingang des Operationsverstärkers zugeführt und die Steuereingangsspannung dem nicht-invertierenden Eingang. Der Operationsverstärker steuert dabei einen Steuertransistor an, der die Höhe des Steuersignals bestimmt, das an einem Steuerausgang der Schaltung bereitgestellt wird zur Ansteuerung des Regeltransistors.

Weitere vorteilhafte Ausgestaltungen der erfindungsgemäßen Steuereinheit sind in den Unteransprüchen angegeben. Ebenfalls ist eine Lüfteranordnung angegeben, die eine erfindungsgemäße Steuereinheit umfaßt.

Die Erfindung wird nachfolgend anhand eines Ausführungsbeispiels näher erläutert. Es zeigt:

Figur 1        ein Ausführungsbeispiel einer Lüfteranordnung mit einer erfindungsgemäßen Steuereinheit,

Figuren 2      und 3 Schaltungsanordnungen aus dem Stand der Technik.

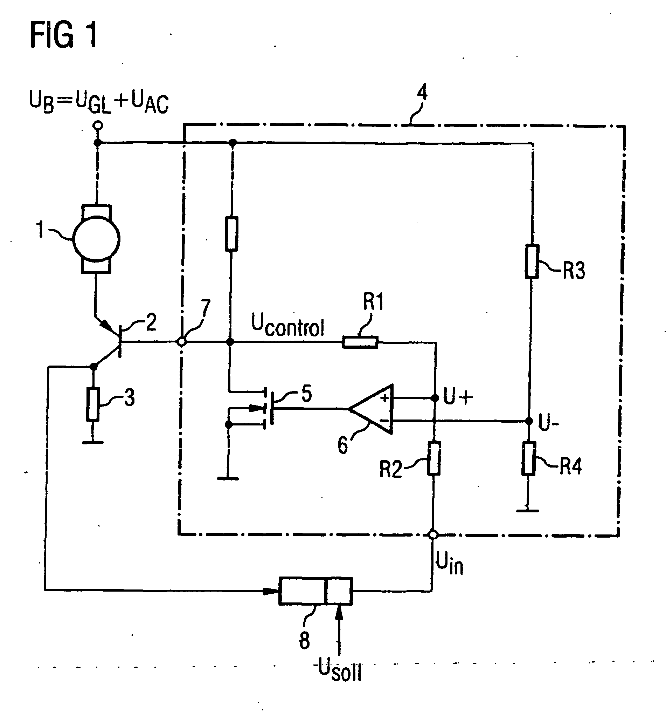

Die Figur 1 zeigt eine Lüfteranordnung mit einem Lüfter 1, einem Regeltransistor 2 und einem Strommeßwiderstand 3, die in Reihe geschaltet und mit einer Betriebsspannung $U_B$ verbunden sind. Der Regeltransistor 2 wird von einer erfindungsgemäßen Steuereinheit 4 angesteuert. Zudem ist eine Drehzahlerfassungvorrichtung 8 vorgesehen, die einerseits mit dem Strommeßwiderstand 3 verbunden ist und andererseits die Steuereingangsspannung $U_{in}$ für die Steuereinheit 4 bereitstellt. In der Betriebsspannung kann es, wie oben ausgeführt, zu Schwankungen kommen, so daß über der Anordnung aus dem Lüfter 1, dem Regeltransistor 2 und dem Strommeßwiderstand 3 eine Spannung $U_B = U_{Gl} + U_{AC}$ anliegt, die größer oder kleiner als die Nennbetriebsspannung $U_{Gl}$ sein kann. Diese schwankende Betriebsspannung wird über einen Spannungteiler mit Widerständen R3 und R4 dem invertierenden Eingang eines Operationsverstärkers 6 zugeführt. Die von der Drehzahlerfassungsvorrichtung 8 erzeugte Steuereingangsspannung $U_{in}$ wird dem nicht-invertierenden Eingang des Operationsverstärkers 6 zugeführt.

Der Ausgang des Operationsverstärkers 6 ist mit dem Gate-Anschluß eines N-MOS-Transistors 5 verbunden. Dieser ist einerseits mit Masse verbunden und andererseits mit einem Steuerausgang 7 der Steuereinheit 4, der zum Anschluß des Steuereingangs des Regeltransistors 2 vorgesehen ist. Zwischen dem Steuerausgang 7 und dem nicht-invertierenden Eingang des Operationsverstärkers 6 ist ein erster Widerstand R1 angeordnet. Zudem ist der nicht-invertierende Eingang mit einem zweiten Widerstand R2 verbunden, der mit der Steuereingangsspannung $U_{in}$ beaufschlagt wird. Ein zusätzlicher Widerstand ist mit dem Steuerausgang 7 und der Betriebsspannung verbunden. Er dient als Pull-up Widerstand für den Ausgangstransistor.

Die erfindungsgemäße Steuereinheit 4 realisiert zwei Regelkreise. Ein erster Regelkreis wird durch die Erfassung der Drehzahl sowie eine entsprechenden Erzeugung einer Ansteuerspannung $U_{control}$ gebildet, über das der Regeltransistor 2 angesteuert wird. Die von der Drehzahlerfassungsvorrichtung 8 ermittelte Ist-Drehzahl wird mit einer Soll-Drehzahl $n_{soll}$ verglichen und eine von der Abweichung abhängige Steuereingangsspannung $U_{in}$ für die Steuereinheit 4 erzeugt. Die Zeitkonstante dieses ersten Regelkreises ist verhältnismäßig groß und liegt typischerweise im Bereich von mehreren 100 ms. Eine schnellere Regelung ist nicht erforderlich, da sich auch die Temperatur eines zu kühlenden Geräts nur verhältnismäßig langsam ändert.

Ein zweiter Regelkreis wird dadurch gebildet, daß die wesentlich schnelleren Spannungsschwankungen durch den Wechselspannungsanteil $U_{AC}$ in der Betriebsspannung $U_B$ über den Spannungsteiler mit dem dritten und vierten Widerstand R3 und R4 auf den Operationsverstärker 6 geführt werden. Dadurch ergibt sich eine zusätzliche Eingangsgröße für die Bestimmung der Ansteuerspannung $U_{control}$.

Im Normalbetrieb, wenn also keine Wechselspannungen überlagert sind, bewirkt eine zu geringe Ist-Drehzahl eine Vergrößerung der Steuereingangsspannung $U_{in}$. Dadurch steigt auch die Ausgangsspannung des Oper tionsverstärkers 6. Entsprechend verringert sich die Ansteuerspannung $U_{control}$ mit dem der Regeltransistor 2 angesteuert wird. Aufgrund der geringeren Rasisspannung am Transistor 2 sinkt auch die Emitterspannung, da es sich um einen Spannungsfolger handelt. Für die Spannung über dem Lüfter 1 ergibt sich jedoch ein höherer Wert, da die Betriebsspannung $U_B$ am anderen Anschluß des Lüfters 1 gleich bleibt. Der Lüfter dreht demnach schneller, was am Strommeßwiderstand 3 erfaßt wird.

Schnelle Änderungen der Betriebsspannung durch den Wechselspannungsanteil $U_{AC}$ verändern zwar nicht signifikant die Drehzahl des Lüfters 1 über den beschriebenen Regelmechanismus, jedoch kann es zu einer kurzzeitigen Erhöhung der Spannung über dem Lüfter 1 kommen, was zu einem höheren Strom durch den Lüfter 1 und somit auch durch den Strommeßwiderstand 3 führt, was letztlich zu einer fehlerhaften Erkennung eines Kommutierungsimpulses führen kann, wodurch eine höhere Drehzahl erkannt wird als tatsächlich vorliegt.

Die erfindungsgemäße Steuereinheit 4 verhindert dies, indem die Betriebsspannung über den Spannungsteiler mit den Widerständen R3 und R4 dem invertierenden Eingang des Operationsverstärkers 6 zugeführt wird. Eine kurzzeitige Erhöhung der Betriebsspannung führt zu einer Verringerung der Ausgangsspannung des Operationsverstärkers 6. Daher vergrößert sich die Ansteuerspannung $U_{control}$, was zu einer Erhöhung der Spannung am Emitter des Regeltransistors 2 führt und somit zu einer Erhöhung der Spannung am unteren Anschluß des Lüfters 1. Die Spannung über dem Lüfter 1 bleibt somit gleich. Entsprechend bleibt der Strom durch den Lüfter 1 und den Strommeßwiderstand 3 gleich. Eine fehlerhafter Erkennung eines Kommutierungsimpulses durch die Drehzahlerfassungsvorrichtung 8 ist somit ausgeschlossen.

Je nach Dimensionierung der Widerstände R1, R2, R3 und R4 ergibt sich eine vollständige oder teilweise Kompensation der Schwankungen in der Betriebsspannung. Im folgenden wird rechnerisch gezeigt, wie eine vollständige Kompensation der Betriebsspannungsschwankungen erreicht werden kann. Für die Spannung über den Lüftern ergibt sich:

$$(I) \quad U_{Lüfter} = U_{Gl} + U_{AC} + U_{BE} - U_{control}.$$

Da die Spannung U+ am nicht-invertierenden Eingang des Operationsverstärkers 6 gleich der Spannung U- am invertierenden Eingang des Operationsverstärkers 6 ist, ergibt sich

$$(II) \quad (U_{control} - U_{in}) * R2/(R1 + R2) + U_{in} =$$
$$= (U_{Gl} + U_{AC}) * R4/(R3 + R4).$$

Wird nun das Verhältnis R1/R2 - R3/R4 gewählt, gilt auch R2/(R1 + R2) = R4/(R3 + R4) = a und es ergibt sich nach Umstellung der Gleichung

$$(U_{control} - U_{in}) * a + U_{in} = (U_{Gl} + U_{AC}) * a$$

$$U_{control} * a + U_{in} * (1 - a) = U_{Gl} * a + U_{AC} * a$$

$$U_{control} = U_{Gl} + U_{AC} - U_{in} * (1 - a)/a.$$

Eingesetzt in die Lüftergleichung (I) ergibt sich

$$U_{Lüfter} = U_{Gl} + U_{AC} + U_{BE} - (U_{Gl} + U_{AC} - U_{in} * (1 - a)/a) =$$
$$= U_{in} * (1 - a)/a + U_{BE}.$$

Somit ist gezeigt, daß bei der oben genannten Wahl der Widerstandsverhältnisse die Lüfterspannung innerhalb des Regelbereichs der Schaltung unabhängig von der Betriebsspannung ist, und zwar sowohl unabhängig von dem Gleichspannungsanteil $U_{Gl}$ als auch von dem Wechselspannungsanteil $U_{AC}$. Maßgeblich ist nur die Steuereingangs- spannung $U_{in}$. Somit ist das Problem der durch Betriebsspannungsschwankungen hervorgerufenen fehlerhaften Kommutierungsimpulserkennungen beseitigt.

Bezugszeichenliste

1   Lüfter
2   Regeltransistor
3   Strommeßwiderstand
4   Steuereinheit
5   Steuertransistor
6   Operationsverstärker
7   Steuerausgang
8   Drehzahlerfassungsvorrichtung

$U_{control}$       Ansteuerspannung
$U_{in}$            Steuereingangsspannung
$U_B$            Betriebsspannung

| | |
|---|---|
| $U_{Gl}$ | Gleichspannungsanteil der Betriebsspannung |
| $U_{AC}$ | Wechselspannungsanteil der Betriebsspannung |
| $n_{soll}$ | Solldrehzahl |
| R1, R2, R3, R4 | Widerstände |

**Patentansprüche**

1. Steuereinheit zur Ansteuerung eines Regeltransistors (2) einer Lüfteranordnung, in der der Regeltransistor (2) mit einem elektronisch kommutierten Lüfter (1) in Reihe geschaltet ist, wobei
die Steuereinheit (4) Kompensationsmittel (R3, R4) umfaßt zur Beeinflussung einer Ansteuerspannung ($U_{control}$) in Abhängigkeit eines Wechselspannungsanteils ($U_{AC}$) einer Betriebsspannung ($U_B$) der Lüfteranordnung, so daß in einer Spannung über dem Lüfter (1) der Wechselspannungsanteil ($U_{AC}$) der Betriebsspannung ($U_B$) ganz oder teilweise ausgeglichen ist,
**dadurch gekennzeichnet , daß**
die Steuereinheit Steuermittel (5, 6, R1, R2) umfaßt zur analogen Ansteuerung des Regeltransistors (2) mit der Ansteuerspannung (U-control) in Abhängigkeit einer Steuereingangsspannung ($U_{in}$),
die Kompensationsmittel mit einem Operationsverstärker (6) zusammenwirken, wobei auf einen Eingang die Steuerein-' gangsspannung ($U_{in}$) geführt ist und die Betriebsspannung ($U_B$) über einen Spannungsteiler mit einem dritten und vierten Widerstand (R3, R4) auf einen anderen Eingang geführt ist,
ein Steuertransistor (5) vorgesehen ist und zur Ansteuerung des Regeltransistors (2) mit einem Steuerausgang (7) der Steuereinheit verbunden ist und der Steuertransistor (5) zu seiner Ansteuerung mit dem Ausgang des Operationsverstärkers (6) verbunden ist und
der Steuerausgang (7) mit dem Steuertransistor (5) über einen Pull-up Widerstand ($R_p$) mit der Betriebsspannung ($U_B$) und über einen ersten Widerstand (R1) mit dem einen Eingang des Operationsverstärkers (6) verbunden ist und der eine Eingang zusätzlich mit einem zweiten Widerstand (R2) verbunden ist zum Empfang der Steuereingangsspannung ($U_{in}$).

2. Steuereinheit nach Anspruch 1,
**dadurch gekennzeichnet , daß**
eine Vergrößerung der Steuereingangsspannung ($U_{in}$) eine Vergrößerung der Lüfterdrehzahl bewirkt.

3. Steuereinheit nach Anspruch 1 oder 2,
**dadurch gekennzeichnet, daß**
das Verhältnis des ersten zum zweiten Widerstand (R1, R2) gleich dem Verhältnis des dritten zum vierten Widerstand (R3, R4) ist.

4. Steuereinheit nach einem der Ansprüche 1 bis 3,
**dadurch gekennzeichnet , daß**
die Steuereinheit als integrierter Schaltkreis ausgebildet ist.

5. Lüfteranordnung mit

   - Anschlüssen zum Zuführen einer Betriebsspannung ($U_B$),
   - einem elektronisch kommutierten Lüfter (1) und
   - einem zu diesem in Reihe geschalteten Regeltransistor (2),
   **gekennzeichnet durch**
   eine Steuereinheit (4) nach einem der Ansprüche 1 bis 4.

6. Lüfteranordnung nach Anspruch 5,
**dadurch gekennzeichnet , daß** eine Drehzahlerfassungsvorrichtung (8) vorgesehen ist, die durch Kommutierungen des Lüfters (1) verursachte Änderungen des Lüfterstroms auswertet, einen Sollwertvergleich durchführt und zur Regelung der Lüfterdrehzahl die Steuermittel zur Ansteuerung des Regeltransistors (2) mit einer Steuereingangsspannung ($U_{in}$) beaufschlagt.

7. Lüfteranordnung nach Anspruch 6,
**dadurch gekennzeichnet , daß**
die Drehzahlerfassungsvorrichtung (8) mit einem Strommeßwiderstand (3) verbunden ist, der im Strompfad des Lüfters (1) angeordnet ist.

**8.** Lüfteranordnung nach einem der Ansprüche 5 bis 7,
**dadurch gekennzeichnet , daß**
der Lüfter (1) einerseits mit der Betriebsspannung ($U_B$) und andererseits mit dem Regeltransistor (2) verbunden ist, durch den dem Lüfter (1) eine geregelte Spannung zugeführt wird.

**9.** Lüfteranordnung nach Anspruch 8,
**dadurch gekennzeichnet , daß**
der Regeltransistor (2) als Spannungsfolger geschaltet ist.

**Claims**

**1.** A control unit for driving a regulating transistor (2) of a fan arrangement, in which the regulating transistor (2) is connected in series to an electronically commutated fan (1), wherein
the control unit (4) comprises compensation means (R3, R4) for acting upon a drive voltage ($U_{control}$) as a function of an alternating voltage portion ($U_{AC}$) of an operating voltage ($U_B$) of the fan arrangement so that the alternating voltage portion ($U_{AC}$) is entirely or partially compensated in a voltage across the fan (1),
**characterized in that**
the control unit comprises control means (5, 6, R1, R2) for analogously driving the regulating transistor (2) with the drive voltage ($U_{control}$) as a function of a control input voltage ($U_{in}$),
the compensation means cooperate with an operational amplifier (6), wherein the control input voltage ($U_{in}$) is guided to one input and the operating voltage ($U_B$) is guided to another input via a voltage divider having a third and a fourth resistor (R3, R4),
a control transistor (5) is provided and in communication with a control output (7) of the control unit for driving the regulating transistor (2) and the control transistor (5), for being driven, is in communication with an output of the operational amplifier (6), and
the control output (7) is in communication with the control transistor (5) via a pull-up resistor (Rp) having the operating voltage ($U_B$) and with the one input of the operating amplifier (6) via a first resistor (R1), and the one input is in addition in communication with a second resistor (R2) for receiving the control input voltage ($U_{in}$) .

**2.** The control unit according to claim 1,
**characterized in that**
an increase in the control input voltage ($U_{in}$) causes an increase of the fan rotational speed.

**3.** The control unit according to claim 1 or 2,
**characterized in that**
the ratio between the first and the second resistor (R1, R2) is equivalent to the ratio between the third and the fourth resistor (R3, R4).

**4.** The control unit according to any one of claims 1 to 3,
**characterized in that**
the control unit is formed as an integrated circuit.

**5.** A fan arrangement comprising

- terminals for supplying an operating voltage ($U_B$)
- an electronically commutated fan (1), and
- a regulating transistor (2) connected in series to same,

**characterized by**
a control unit (4) according to any one of claims 1 to 4.

**6.** The fan arrangement according to claim 5,
**characterized in that**
a rotational speed detection device (8) is provided which evaluates changes in the fan current caused by commutations of the fan (1), performs a set-point comparison and, for regulating the fan rotational speed, applies a control

input voltage ($U_{in}$) to the control
means for driving the regulating transistor (2).

**7.** The fan arrangement according to claim 6,
**characterized in that**
the rotational speed detection device (8) is in communication with a current-measuring resistor (3) which is arranged in the current path of the fan (1).

**8.** The fan arrangement according to any one of claims 5 to 7,
**characterized int hat**
the fan (1) is in communication with the operating voltage ($U_B$) on the one hand and, on the other, with the regulating transistor (2) through which the fan (1) is supplied with a regulated voltage.

**9.** The fan arrangement according to claim 8,
**characterized in that**
the regulating transistor (2) is connected as a voltage follower.

**Revendications**

**1.** Unité de commande destinée à piloter un transistor de régulation (2) d'un ensemble ventilateur, dans laquelle le transistor de régulation (2) est connecté en série avec un ventilateur (1) à commutation électronique, où l'unité de commande (4) comporte des moyens de compensation (R3, R4) destinés à influencer une tension de pilotage (control) en fonction d'une composante de tension alternative ($U_{AC}$) d'une tension de service ($U_B$) de l'ensemble ventilateur de sorte que, dans une tension au niveau du ventilateur (1), la composante de tension alternative ($U_{AC}$) de la tension de service ($U_B$) soit compensée en tout ou en partie,
**caractérisée en ce que**
l'unité de commande comporte des moyens de commande (5, 6, R1, R2) destinés à piloter analogiquement le transistor de régulation (2) avec la tension de pilotage ($U_{control}$) en fonction d'une tension d'entrée de commande ($U_{in}$) ,
les moyens de compensation interagissent avec un amplificateur opérationnel (6), la tension d'entrée de commande ($U_{in}$) étant amenée à une entrée et la tension de service ($U_B$) étant amenée à une autre entrée via un diviseur de tension avec une troisième et une quatrième résistance (R3, R4),
un transistor de commande (5) est prévu et, pour le pilotage du transistor de régulation (2), est relié à une sortie de commande (7) de l'unité de commande, et le transistor de commande (5) est relié pour son pilotage à la sortie de l'amplificateur opérationnel (6), et
la sortie de commande (7) associée au transistor de commande (5) est reliée à la tension de service ($U_B$) via une résistance d'excursion haute (Rp) et à ladite entrée de l'amplificateur opérationnel (6) via une première résistance (R1) et
ladite entrée est en outre reliée à une deuxième résistance (R2) pour la réception de la tension d'entrée de commande ($U_{in}$) .

**2.** Unité de commande selon la revendication 1,
**caractérisée en ce que**
une augmentation de la tension d'entrée de commande ($U_{in}$) provoque une augmentation de la vitesse de rotation du ventilateur.

**3.** Unité de commande selon la revendication 1 ou 2,
**caractérisée en ce que**
le rapport de la première à la deuxième résistance (R1, R2) est égal au rapport de la troisième à la quatrième résistance (R3, R4).

**4.** Unité de commande selon l'une des revendications 1 à 3,
**caractérisée en ce que**
l'unité de commande est configurée comme circuit intégré.

**5.** Ensemble ventilateur comportant

- des bornes pour l'amenée d'une tension de service ($U_B$),
- un ventilateur à commutation électronique (1) et
- un transistor de régulation (2) connecté en série avec celui-ci,

**caractérisé par**
une unité de commande (4) selon l'une des revendications 1 à 4.

6. Ensemble ventilateur selon la revendication 5,
**caractérisé en ce que**
un dispositif d'acquisition de vitesse de rotation (8) est prévu, lequel évalue des variations du courant de ventilateur causées par des commutations du ventilateur (1), effectue une comparaison avec une valeur de consigne et, pour la régulation de la vitesse de rotation du ventilateur, applique une tension d'entrée de commande ($U_{in}$) aux moyens de commande destinés à piloter le transistor de régulation (2).

7. Ensemble ventilateur selon la revendication 6,
**caractérisé en ce que**
le dispositif d'acquisition de vitesse de rotation (8) est relié à une résistance de mesure de courant (3) qui est disposé dans le trajet du courant du ventilateur (1) .

8. Ensemble ventilateur selon l'une des revendications 5 à 7,
**caractérisé en ce que**
le ventilateur (1) est relié d'une part à la tension de service ($U_B$) et d'autre part au transistor de régulation (2) par lequel une tension régulée est amenée au ventilateur (1).

9. Ensemble ventilateur selon la revendication 8,
**caractérisé en ce que**
le transistor de régulation (2) est connecté comme suiveur de tension.

# FIG 1

$U_B = U_{GL} + U_{AC}$

$U_{control}$

R1

R3

5

+

−

U+

U−

6

R2

R4

7

1

2

3

4

$U_{in}$

8

$-U_{soll}$

## FIG 2

$U_B = U_{GL} + U_{AC}$

$U_{control}$

## FIG 3

$U_B = U_{GL} + U_{AC}$

$R_p$

$U_{control}$

R1

5

6

$U_{in}$

R2

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4408442 A1
- WO 9962169 A